# EUROPEAN PATENT SPECIFICATION

(11) **EP 3 384 777 B1**
(45) Date of publication and mention of the grant of the patent: **17.02.2021**
(21) Application number: 17290052.4
(22) Date of filing: 07.04.2017
(51) Int. Cl.: A21D 8/04, A23L 3/3454, A21D 15/08, A21D 13/24, A21D 13/28

(54) **EXTENDED SHELF-LIFE BAKED BAGEL PRODUCT AND METHOD TO PRODUCE IT**
GEBACKENES BAGEL-PRODUKT MIT VERLÄNGERTER HALTBARKEIT UND VERFAHREN ZU DESSEN HERSTELLUNG
BAGEL CUIT AU FOUR À DURÉE DE CONSERVATION PROLONGÉE ET SON PROCÉDÉ DE PRODUCTION

(43) Date of publication of application: 10.10.2018
(73) Proprietor: Barilla France S.A.S., 92100 Boulogne-Billancourt (FR)
(72) Inventor: Ruggeri, Alessandro, 75015 Paris (FR); Boselli, Tiziano, I-43123 Parma (IT); Carde, France, 85440 Talmont Saint Hilaire (FR)
(74) Representative: Ferreccio, Rinaldo

(56) References cited:
- WO-A1-2011/109300
- US-A- 3 979 525
- US-A- 4 582 711
- US-A1- 2016 000 097
- CAVALLARO A ET AL: "Ethanol in bakery products", INDUSTRIE ALIMENTARI, CHIRIOTTI EDITORE, PINEROLO, IT, vol. 37, no. 368, 1 January 1998 (1998-01-01), pages 321-322, XP009194680, ISSN: 0019-901X
- Daphne Phillips Daifas ET AL: "EFFECT OF ETHANOL VAPOR ON GROWTH AND TOXIN PRODUCTION BY CLOSTRIDIUM BOTULINUM IN A HIGH MOISTURE BAKERY PRODUCT", Journal of Food Safety, 1 June 2000 (2000-06-01), pages 111-125, XP055380719, Oxford, UK DOI: 10.1111/j.1745-4565.2000.tb00292.x Retrieved from the Internet: URL:http://onlinelibrary.wiley.com/store/1 0.1111/j.1745-4565.2000.tb00292.x/asset/j. 1745-4565.2000.tb00292.x.pdf?v=1&t=j3u9atu n&s=f6c6f46a9b1c7d98c15816121109dcc3a8a6ae 2a
- J.P. SMITH ET AL: "Shelf life extension of a bakery product using ethanol vapor", FOOD MICROBIOLOGY., vol. 4, no. 4, 1 September 1987 (1987-09-01), pages 329-337, XP055380720, GB ISSN: 0740-0020, DOI: 10.1016/S0740-0020(87)80007-2
- SILVERSTEIN O: "HEAT-STABLE BACTERIAL ALPHA-AMYLASE IN BAKING APPLICATION TO WHITE BREAD", BAKER'S DIGEST, SIEBEL PUBLISHING CO. PONTIAC, ILLINOIS, US, vol. 38, no. 4, 1 August 1964 (1964-08-01) , pages 66-70,72, XP001148912, ISSN: 0191-6114

## Description

### Field of application

The present invention relates in general to the technical field of the food industry.

More particularly the present invention relates to a soft baked bagel product with an extended shelf life.

### Prior art

Soft bagels have become one of the most popular bread snacks in several countries, including the U.S.A., UK, Germany, France and other European countries, because of their highly appreciated organoleptic properties and texture.

The food industry has made available packaged baked bagel products with a shelf-life of several days or even several weeks.

Generally, the term "shelf life" means the time frame in which a food item retains its microbiological, organoleptic and textural characteristics substantially unchanged when stored at room temperature.

These industrial products, which mimic bagels prepared using traditional methods, are generally popular with consumers because they offer the possibility of having a snack readily available at home, at school or at the place of work. These products in fact maintain their organoleptic and structural properties even after a relatively long period of storage at room temperature, in addition to being entirely safe from a microbiological point of view.

It has been noticed, however, that at the end of the storage period, the softness characteristics of these bakery products start to decline owing to redistribution of the water between an outer part of the product or the crust and the inner part, which results in gradual softening of the crust and gradual hardening of the inner part, and also because of the staling resulting from transfer of water between proteins and starch and retrogradation of the starch, whereby the starch recovers part of the crystalline structure of raw starch which was lost with gelatinization during baking. It is known, on the other hand, that an increase in the moisture content results in the perception of a greater freshness of the finished bakery product.

It has been attempted to solve this problem by modifying the composition of the starting ingredients of the bakery product by adding ingredients which are able to retain water, such as dietary fibers, pectins, gums, alginates and similar polysaccharides. However, such addition worsens the characteristics of the dough, which becomes too tough and difficult to work, and in any case means that food additives are present in the final product, which is not to the liking of all consumers, many of whom prefer products without food additives, insofar as these additives are permitted by the existing regulations in the food sector.

In the prior art, different strategies to diminish the negative effects of staling of baked bagel products have been proposed.

Some of them suggest the use of enzymes together with an emulsifier and at least one preservative in the dough to improve softness of bakery products and guarantee the microbiological stability of the product during the storage thereof.

For example, WO 03/024231 concerns extended shelf life bakery product compositions, which comprise at least one preservative (for example, a salt of propionic acid), at least one gum (for example guar gum or xanthan gum) and at least one enzyme (hydrolytic, oxidizing, and reducing enzymes) in an effective amount which results in a shelf life extended beyond 14 days for a bakery product prepared from the dough composition.

Among the bakery products obtainable form said dough composition, the baked bagel product has a shelf life from 16 days to 26 days.

WO 2007/144433 describes an improved bakery product containing a combination of betaine and enzyme in an effective amount to improve the textural properties of a bakery product when baked.

The amount of enzyme ranges from 0.01 and 20 mg enzyme protein per kg of flour and it is selected from carbohydrate degrading enzymes, protein degrading enzymes and fat degrading enzymes. The baked good can also comprise an emulsifier which preferably has a synergistic effect on the betaine/enzyme combination and it is a typical emulsifier used in baking, namely mono- and diglycerides of various fatty acid compositions (page 7).

Some prior art documents foresee the use of microorganisms as alternative to the chemical preservatives (such as organic acids and salts) to prevent or slowing mold growth, which is one of the common issues in many bakery products.

WO 2014/152022 discloses a bakery food product with a mold-free shelf life of at least 1 month, preferably at least 3 months, under non-refrigerated conditions after baking. To guarantee this extended shelf life, the baked bakery product, which does not contain preservatives, is subjected to the addition of a solution comprising live yeast to the whole surface. The yeast selected for this function, namely *Zygosaccharomyces* yeast, is able to produce naturally occurring volatiles (for example, acetaldehyde) which are known to have antifungal and antibacterial properties and, therefore may be effective for inhibiting the growth of decay microorganism, including molds.

Such yeasts thrive in low water activity environments and, therefore, the baked product is characterized by a surface with a water activity as low as about 0.84 or less.

US 2016/0000097 discloses a refrigerated packaged baked product prepared by applying a live yeast treatment to a surface of the baked product comprising:
a baked product prepared with a starch-degrading bacterially derived amylase enzyme and with a live yeast and fermented aqueous sugar and ethanol solution containing about 1% to about 5% live yeast, about 0% to about 40% sugar, and about 5% to about 20% ethanol from the fermentation, applied on a surface of the baked product in an amount of about 0.5 to about 2 ml per about 80 to about 100 grams of baked product;
a packaging within which the baked product is enclosed; and wherein the live yeast and fermented aqueous sugar and ethanol solution produces acetaldehyde and the baked product is free of mold for up to 6 months when stored at refrigerated temperatures of about 0° C. to about 10° C.

US 4 582 711 discloses a lower moisture, storage stable, ready-to-eat, cooked good which is either a cookie or a brownie. This cooked good is made from a flour containing base batter or dough mix, water, sugar and about 5% to about 15% by weight of said cooked good of a liquid edible polyhydric alcohol, said batter or dough mix having a water activity level sufficiently low to provide a high quality long shelf life cooked good. The water activity level (Aw) of the cooked good is equal to or less than 0.85, the ratio of total water of said cooked good to liquid polyhydric alcohol is equal to or less than 4.8, and the ratio of starch present in the flour of said cooked good to liquid polyhydric alcohol is equal to or less than 3.95.

In the light of the prior art discussed above, the objective technical problem forming the basis of the present invention is to provide a packaged baked bagel product which can be stored at room temperature, without the aid of preservatives or modified atmosphere, and which shows improved soft texture and extended shelf life compared to those of the prior art's product, keeping its softness characteristics unchanged for a storage period at room temperature of at least 45 days.

### Summary of the invention

This problem has been solved, according to the invention, by a soft baked bagel product, packaged in a wrapper of food-grade plastic material in an unmodified atmosphere, having a moisture content comprised between 28% and 32%, a water activity comprised between 0.91 and 0.93, a shelf life of at least 45 days at a temperature comprised between 12°C and 25 °C, characterized in that it is obtained from a dough which is free of preservatives and which comprises a maltogenic alpha-amylase in an amount of 0.005% to 1.0% by weight of the bagel weight, and in that the bagel is sprayed with a hydroalcoholic solution before sealing the packaging, wherein the hydroalcoholic solution is a solution of ethyl alcohol in water with an amount of ethyl alcohol of between 90% and 95% by weight of the total weight of the solution, and it is sprayed onto the surface of the bagel in an amount comprised between 0.5 and 2.0% by weight of the bagel weight.

Preferably, the maltogenic alpha-amylase enzyme is contained in an amount of 0.05% to 0.2%, by weight of the bagel weight.

Preferably, the bagel comprises, in percentages by weight of its total weight, 58-60% flour; 1-20% sugar; 2.5-3.5% dextrose; 1.5-20% vegetable fats and/or oils; 1-1.5% salt; 20-35% water; 0.5-0.7% wheat gluten; 0.5-0.7% yeast; and up to 0.10% deactivated yeast.

More preferably, the bagel comprises in percentages by weight of its total weight, 58-60% flour; 1-2% sugar; 2.5-3.5% dextrose; 1.5-2.5% vegetable fats and/or oils; 1-1.5% salt; 30-35% water; 0.5-0.7% wheat gluten; 0.5-0.7% yeast; and up to 0.10% deactivated yeast. Preferably, the flour is selected from any cereal flour, more preferably in the group consisting of durum wheat, soft wheat, turanicum wheat (Triticum turgidum ssp. turanicum), rye, corn, rice, and mixtures thereof, even more preferably soft wheat flour.

Specific nutrients and vitamins (e.g. iron, vitamin A, niacin, etc) can be added to the flour according to national laws and nutritional recommendations.

Preferably, the vegetable oils are selected in the group consisting of palm, rapeseed, olive, sunflower, high oleic sunflower, canola oils.

In another aspect thereof, the present invention discloses a process to produce the above-mentioned soft baked bagel product, wherein the process comprises the step of:
a) preparing a bagel dough having a moisture content of 30% and comprising a maltogenic alpha-amylase;
b) dividing the dough into dough balls of a weight of about 80-110 g;
c) subjecting the dough balls to conventional shaping steps to obtain semi-finished products having the shape of rings;
d) subjecting the semi-finished products to conventional steps of proofing and baking, to obtain baked bagels;
e) inserting the baked bagels into a food grade plastics envelope;
f) spraying a hydroalcoholic solution inside the envelope containing the baked bagels, wherein the hydroalcoholic solution is a solution of ethyl alcohol in water with an amount of ethyl alcohol of between 90% and 95%, by weight of the total weight of the solution, in an amount comprised between 0.5 and 2.0% by weight of the bagel weight
g) sealing the envelope.

Preferably, the hydroalcoholic solution is a solution of ethyl alcohol in water with an amount of ethyl alcohol of between 90% and 95%, by weight of the total weight of the solution.

Preferably, after the step c) and before the step d) the dough balls are subjected to a pre-proofing step at 20-25°C with a relative humidity of 40-50% for five minutes.

Preferably, the proofing of the step d) occurs at a temperature of 32-38°C, with a relative humidity of 65-85% for 60 to 150 minutes.

Preferably, before the step f) of inserting baked bagels into an envelope suitable for packaging in an unmodified atmosphere, a horizontal, partial cut is carried out on each bagel, parallel to its bottom surface, at or below half of the bagel's height and extending from the bagel's peripheral edge towards the bagel's inner hole without reaching it, in such a way as to obtain an upper portion and a lower portion that are still joined in the area surrounding the inner hole.

Advantageously, the present invention provides a baked bagel storable at room temperature, which ensures the microbiology stability and a soft texture thanks to particular useful features which are discussed in detail below.

The expression "storable at room temperature" or "which can be stored at room temperature" is understood as meaning that the bakery product, once packaged in a wrapper of food-grade plastic material, may be stored at shelf temperature (12-25°C) for a period of at least 45 days and preferably between 45 days to 60 days, keeping its organoleptic and textural properties unchanged, with particular regard to the softness characteristics, without the addition of any preservatives into the starting dough or the use of a modified atmosphere in the package in which the baked bagel product is stored.

In particular, the bagel according to the present invention is characterized by a thin, shiny, crackly, hard crust and a soft inner part, which is easy to bite through, and it maintains such characteristics all over its shelf-life, although no preservatives are added to the starting dough and no modified atmosphere is introduced in the package, thanks to the measures envisaged by the present invention in combination with one another, namely the moisture/water activity control, the addition of at least one amylolytic enzyme to the starting dough and the spraying of a hydroalcoholic or alcoholic solution onto the bagel's surface before the packaging thereof.

The presence of the at least one amylolytic enzyme and the moisture/water activity control of the bagel improve the softness of bakery products, retards moisture migration from the baked bagel, retards the staling, thus improving the shelf life of the product, and imparts a smoother and softener texture to the baked product.

The control of moisture and water activity is also involved in another crucial feature of the bagel according to the present invention: the microbiological stability, which is achieved by a strategy which is different from those adopted in the above mentioned prior art documents.

In fact, the present invention ensures the microbiology stability by a moisture/water activity control and by spraying a hydroalcoholic or alcoholic solution onto the surface of the baked bagel before the latter is sealed inside its package.

In this way, mold contaminations on the product's surface is prevented by the presence of the alcohol, while moisture/water activity control hinders mold or bacterial contaminations.

Thus, the addition of preservatives to the starting dough, which is mandatorily carried out with the known industrial bagels, is not envisaged by the present invention.

The term "preservative" as used herein encompasses artificial preservatives, or chemical preservatives, like e.g. sorbates, benzoates, propionates and nitrates, which, when added to food, prevent or retard deterioration by microbial contamination thereof.

A further advantage of the present invention lies in the use of a standard flexible film packaging (for example, monolayer polypropylene like coextruded OPP (oriented polypropylene) or PP cast, or multilayer like OPP + PP CAST), with no need of modified atmosphere.

The expression "modified atmosphere" as used herein means the practice of modifying the composition of the internal atmosphere of a package in order to improve the shelf life. The modification process is aimed at lowering the amount of oxygen (O₂), moving it from 20.9% to about 0%, in order to slow down the growth of aerobic organisms and prevent oxidation reactions. The removed oxygen can be replaced with nitrogen (N₂), commonly acknowledged as an inert gas, or carbon dioxide (CO₂), which can lower the pH and/or inhibit the growth of bacteria.

As no modified atmosphere is used in the present invention, the production costs are lowered and the industrial process for producing the bagels is speeded up.

Others features and advantages of the present invention will emerge more clearly from the description hereinbelow of a number of preferred embodiments, said description being provided by way of a non-limiting example.

### Brief description of the drawings

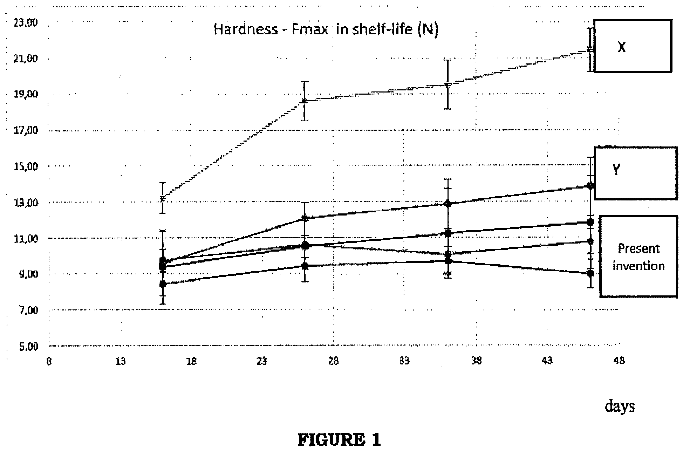

Figure 1 shows a comparative graph of the texture during the shelf life of the bagel according to the present invention and the commercially available bagels.

### Detailed description

The present invention provides a baked bagel product which displays a soft texture during its entire shelf life, thanks to a careful control of the moisture content and the water activity, combined with the use of at least one amylolytic enzyme and the spraying of the baked bagels with an alcoholic or hydroalcoholic solution, without the need to incorporate any preservative in the dough or to use modified atmosphere packaging to ensure microbiological stability.

The process for preparing the soft baked bagel according to the present invention is composed by several steps which are disclosed in detail below.

The first step is to mix all the ingredients to obtain a well-mixed and uniform dough. In a spiral bread mixer, a dough is prepared by mixing the following main ingredients: flour, water, salt, a vegetable oil, an enzyme mix, gluten, dextrose, sugar, yeast and deactivated yeast.

The dough may comprise also at least one emulsifier (such as monoglycerides or diglycerides of fatty acids), calcium carbonate, wheat malted flour, at least one antioxidant (for example, ascorbic acid or niacin) and thiamine (vitamin B1).

At the end of this step, which is carried out at room temperature, it is obtained a dense, well mixed, hard, non-sticky dough.

In a second step, the dough is divided and rounded and, finally, weighted to obtain dough balls of the same weight (about 95 g).

Then, the balls are subjected to a pre-proofing step which occurs for a resting time of about 5 minutes at a temperature comprised between 20°C and 26°C and with a relative humidity of 40-50%.

Forming steps according to the present invention permit to obtain a dough ring from the dough balls.

During a first forming step, each dough ball is formed into a loaf having a length of about 40 cm and a height of about 2 cm; during a second forming step, a ring is obtained from the loaf, by overlapping and pressing the two ends of the loaf over each other.

Afterwards, the dough rings are placed on a baking pan, which is stored in a proofing chamber; the proofing occurs at a temperature comprised between 30°C and 40°C, at a moisture content of 60-80% for about two hours.

In a following optional step, a topping can be deposited onto the dough rings, by first spraying water and then sprinkling edible seeds, such as e.g. sesame seeds, onto their upper surface.

Then, a baking step is carried out in conditions of temperature and humidity and for a time effective to brown the exterior of the dough pieces and set the internal soft crumb structure and to reach the desired humidity level of the product.

In particular, the dough rings are baked in an oven without ventilation, for a period of about 10 minutes, at an average temperature of about 265°C in the upper oven chamber) and about 250°C in the bottom oven chamber to promote a uniform baking, ensuring the formation of a hard and brownish crust. As an alternative, for an oven with ventilation, the baking period is about 20min at an average temperature of about 210°C in the upper oven chamber and about 180°C in the bottom oven chamber to promote a uniform baking, ensuring the formation of a hard and brownish crust. However, it is possible to reach the desired finished product features (visual aspect, chemical and physical characteristics) also with slightly different temperature/time/ventilation settings. On top of the above oven settings, the application of "steam shots" can be envisaged, to obtain final bagels with a more shiny crust.

Later, a cooling step takes place for a time of 30 minutes until the bagels reach a temperature of about 20-30°C and then the bagels are de-panned.

Then, a horizontal, a total or a partial cut is carried out on each bagel, parallel to its bottom surface, at or below half of the bagel's height.

When a partial cut is carried out, this cut extends from the bagel's peripheral edge towards the bagel's inner hole without reaching it, in such a way as to obtain an upper portion and a lower portion that are still joined in the area surrounding the inner hole, i.e. so as to obtain a so-called "butterfly slicing".

The bagels are then introduced into an envelope of food grade flexible film and sprayed with a hydroalcoholic solution, before sealing the packaging envelope.

### Example 1 - Example of production of a soft baked bagel product.

In a VMI spiral bread mixer, the following ingredients were mixed in order to obtain a dough:

| *Ingredient* | *Percentage (%)* |
|---|---|
| Wheat flour | 59.3 |
| Maltogenic alpha-amylase¹ | 0.02 |
| Wheat gluten | 0.6 |
| Dextrose | 3 |
| Sugar | 1.48 |
| Salt | 1.1 |
| Baker's yeast | 0.6 |
| Vegetable oil (rapeseed oil) | 2.36 |
| Water | 31.44 |
| Deactivated baker's yeast | 0.1 |
| Total | 100 |

| | |
|---|---|
| 1 : Novamyl 3D BG from Novozymes. | |

The percentages shown above are to be understood as being by weight relative to the total weight of the ingredients.

In order to distribute the maltogenic alpha-amylase within the dough in the most uniform way, a premix was prepared, using 1% of the above indicated amount of wheat flour and mixing it with the alpha-amylase according to the geometric dilution method.

Once the premix had been added to the remaining ingredients, mixing was carried out at a first slow rate for a period of 3 minutes, followed by a second fast rate for a period of 5 minutes and 30 seconds.

Then, the dough was divided up and formed into balls with a weight of 95 g, which were then rested to allow a pre-proofing of the dough, for 5 minutes at 23°C with a relative humidity of 45%.

Then, the balls were introduced into a long loaf moulder so as to convert them into loaves with a length of 40 cm and a height of 2 cm.

Later, a dough ring was obtained from each loaf, by overlapping and pressing the two end portions (2-3 cm long) of the loaf over each other. The dough rings thus obtained had an internal diameter of about 6.5 cm and a width of about 2 cm.

Then, the dough rings thus formed were placed on a pan (25 rings/pan) and leavened for 120 minutes at a temperature of 34°C in an environment with a relative humidity of 70%. After this proofing step, the dough rings had an internal diameter of about 3 cm and a width of about 4 cm.

A topping was deposited onto the dough rings, by first spraying water (in an amount of 0.5 g per ring) and then sprinkling sesame seeds (in an amount of 1.5 g per ring), onto their upper surface.

Then, the dough rings were baked in oven for 9 min at an average temperature of 265°C in the upper part of the oven chamber and 250°C in the lower part of the oven chamber.

After baking, the thus obtained baked bagels had a core temperature of 95°C just after baking and the following size: internal diameter of about 2 cm, width of about 4 cm and height of about 3.2 cm.

A cooling step took place for 30 minutes at a temperature of 23°C with a relative humidity of 45%. Then, the product was de-panned and subjected to a penetrometer measurement test.

The baked bagels obtained after the cooling step showed the following features.

| | |
|---|---|
| Weight | 75-80 g |
| Diameter | 100 - 120 mm |
| Height | 32 mm |
| Hole diameter | 20-30 mm |
| Ring width | 40 mm |
| Topping type | Sesame seeds |
| Humidity | 30 % |
| Water activity | 0.91 - 0.93 |

Then, a horizontal, partial cut is carried out on each bagel, parallel to its bottom surface, at or below half of the bagel's height and extending from the bagel's peripheral edge towards the bagel's inner hole without reaching it, in such a way as to obtain an upper portion and a lower portion that are still joined in the area surrounding the inner hole, i.e. so as to obtain a so-called "butterfly slicing".

This "butterfly slicing" was obtained by means of a web partial cut slicer "Butterfly", manufactured by the firm Gasparin (Italy).

Afterwards, four butterfly-sliced bagels were placed in a plastic bag (namely a wrapper of food grade polypropylene) and 4 g of 96° ethanol were sprayed inside each bag by means of a Sorex 173 syringe. At the end of this spraying step, the concentration of ethanol on the surface of each bagel was about 0.9-1.2%.

Finally, the aforementioned plastic wrapper was sealed by a welding machine (WU-HSign electronics) at a temperature of 100°C.

### Example 2 - Texture profile during the shelf life of the bagel according to the invention in comparison with that of commercially available bagels.

In the shelf life period ranging from 16 days to 46 days after packaging, texture tests were carried out on bagels according to the present invention and those of two different brands (Auchan and La Boulanger).

The latter two bagels are hereby named X and Y, without specifying which brand they correspond to.

In particular, a bagel with a moisture content of 24% (X), a bagel with a moisture content of 29% (Y) and three bagels with moisture content of 28%, 30% and 32% according to the present invention were tested.

Figure 1 shows that the three bagels according to the present invention had the lowest hardness values during all the tested shelf life period (namely 16^{th} day - 46^{th} day after packaging) if compared with those of the commercially available bagels.

Therefore, this experiment proves that no substantial modifications of the softness characteristics occurred during the entire shelf life of the bagel according to the present invention.

### Example 3 - Main features of the bagel according the to the invention compared with those of commercially available bagels.

In order to highlight the differences between the bagel of the present invention and the others which are commercially available, a comparative table is shown below, wherein different features of bagels made from several brands (namely Monoprix La Boulangere, Intermarche, Horeca, Jacquet, Auchan and Carrefour) are compared with those of the bagel according to the present invention.

The bagels used for the comparison with those according to the present invention are indicated in the following table with the numbers 1 to 6 without providing any correspondence with the above-mentioned brands.

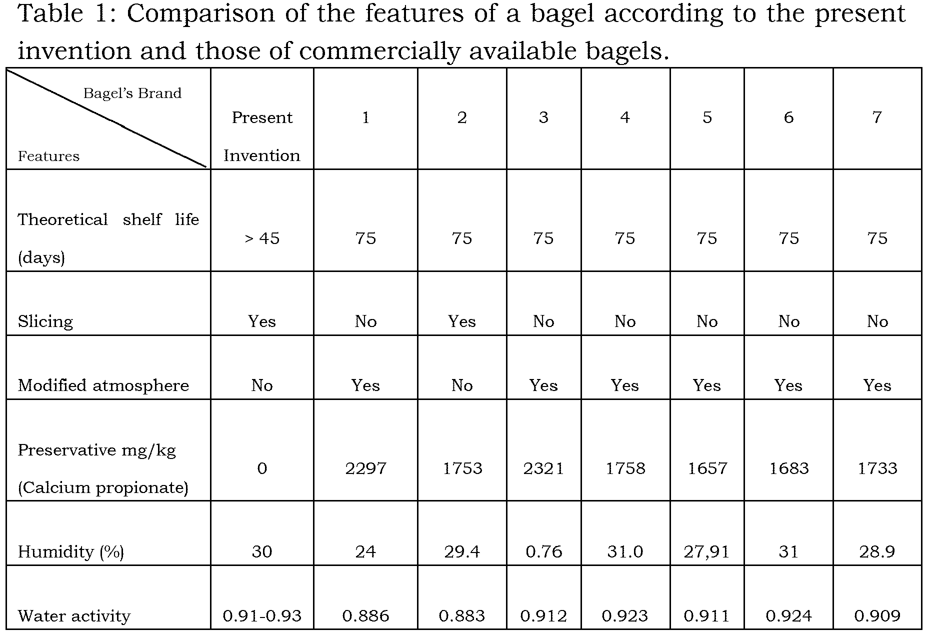

All the of the above commercially available bagels contain calcium propionate and are packaged in a modified atmosphere bag, except for bagels no. 2 which are packaged in a unmodified atmosphere bag, but contain a preservative (calcium propionate).

Therefore, all the known bagels rely on the presence of preservatives in the dough and most of them also on a packaging in modified atmosphere to ensure an extended shelf life.

On the contrary, the present invention provides a baked bagel product which does not contain preservatives nor foresees the use of a packaging with modified atmosphere and yet ensures microbiological stability and a long shelf life.

## Claims

1. A soft baked bagel product, packaged in a wrapper of food-grade plastic material in an unmodified atmosphere, having a moisture content comprised between 28% and 32%, a water activity comprised between 0.91 and 0.93, a shelf life of at least 45 days at a temperature comprised between 12°C and 25°C, **characterized in that** it is obtained from a dough which is free of preservatives and which comprises a maltogenic alpha-amylase in an amount of 0.005% to 1.0% by weight of the bagel weight and **in that** said bagel is sprayed with a hydroalcoholic solution before sealing the packaging, wherein said hydroalcoholic solution is a solution of ethyl alcohol in water with an amount of ethyl alcohol of between 90% and 95% by weight of the total weight of the solution, and it is sprayed onto the surface of the bagel in an amount comprised between 0.5 and 2.0% by weight of the bagel weight.

2. The bagel according to claim 1, wherein said maltogenic alpha-amylase is contained in an amount of 0.05% to 0.2%, by weight of the bagel weight.

3. The bagel according to claim 1 or 2, wherein said bagel comprises, in percentages by weight of its total weight, 58-60% flour; 1-20% sugar; 2.5-3.5% dextrose; 1.5-20% vegetable fats and/or oils; 1-1.5% salt; 20-35% water; 0.5-0.7% wheat gluten; 0.5-0.7% yeast; and up to 0.10% deactivated yeast.

4. The bagel according to claim 1 or 2, wherein said bagel comprises, in percentages by weight of its total weight, 58-60% flour; 1-2% sugar; 2.5-3.5% dextrose; 1.5-2.5% vegetable fats and/or oils; 1-1.5% salt; 30-35% water; 0.5-0.7% wheat gluten; 0.5-0.7% yeast; and up to 0.10% deactivated yeast.

5. The bagel according to any one of claims 3 and 4, wherein said flour is selected from any cereal flour, preferably in the group consisting of durum wheat, soft wheat, turanicum wheat (Triticum turgidum ssp. turanicum), rye, corn, rice, and mixtures thereof, more preferably soft wheat flour.

6. The bagel according to anyone of claims 3-5, wherein said vegetable oils are selected in the group consisting of palm, rapeseed, olive, sunflower, high oleic sunflower, canola oils.

7. A process to produce a soft baked bagel product according to claim 1, wherein said process comprises the step of:
a) preparing a bagel dough having a moisture content of 30% and comprising a maltogenic alpha-amylase;
b) dividing said dough into dough balls of a weight of about 80-110 g;
c) subjecting said dough balls to conventional shaping steps to obtain semi-finished products having the shape of rings;
d) subjecting said semi-finished products to conventional steps of proofing and baking, to obtain baked bagels;
e) inserting said baked bagels into a food grade plastics envelope;
f) spraying a hydroalcoholic solution inside the envelope containing said baked bagels, wherein the hydroalcoholic solution is a solution of ethyl alcohol in water with an amount of ethyl alcohol of between 90% and 95%, by weight of the total weight of the solution, in an amount comprised between 0.5 and 2.0% by weight of the bagel weight;
g) sealing the envelope.

8. The process according to claim 7, wherein after said step c) and before said step d) said dough balls are subjected to a pre-proofing step at 20-25°C with a relative humidity of 40-50% for five minutes.

9. The process according to any one of claims 7 and 8, wherein proofing of said step d) occurs at a temperature of 32-38°C, with a relative humidity of 65-85% for 60-150 minutes.

10. The process according to any one of claims 7 to 9, wherein before said step e) of inserting baked bagels into an envelope suitable for packaging in an unmodified atmosphere, a horizontal, partial cut is carried out on each bagel, parallel to its bottom surface, at or below half of the bagel's height and extending from the bagel's peripheral edge towards the bagel's inner hole without reaching it, in such a way as to obtain an upper portion and a lower portion that are still joined in the area surrounding the inner hole.

## Patentansprüche

1. Weiches gebackenes Bagelprodukt, das in einer Umhüllung aus lebensmittelechtem Kunststoffmaterial in einer unmodifizierten Atmosphäre verpackt ist, mit einem Feuchtigkeitsgehalt zwischen 28% und 32%, einer Wasseraktivität zwischen 0,91 und 0,93, einer Haltbarkeitsdauer von mindestens 45 Tagen bei einer Temperatur zwischen 12°C und 25°C, **dadurch gekennzeichnet, dass** es erhalten wird aus einem Teig, der frei von Konservierungsmitteln ist und der eine maltogene alpha-Amylase in einer Menge von 0,005 Gew.-% bis 1,0 Gew.-% des Bagelgewichts enthält, und dadurch, dass der Bagel vor dem Verschließen der Verpackung mit einer wässrig-alkoholischen Lösung besprüht wird, wobei die wässrig-alkoholische Lösung eine Lösung von Ethylalkohol in Wasser mit einer Ethylalkohol-Menge von zwischen 90 Gew.-% und 95 Gew.-% des Gesamtgewichts der Lösung ist, und dass sie in einer Menge zwischen 0,5 Gew.-% und 2,0 Gew.-% des Bagelgewichts auf die Oberfläche des Bagels gesprüht wird.

2. Bagel nach Anspruch 1, wobei die maltogene alpha-Amylase in einer Menge von 0,05 Gew.-% bis 0,2 Gew.-% des Bagelgewichts enthalten ist.

3. Bagel nach Anspruch 1 oder 2, wobei der Bagel, in Gewichtsprozent seines Gesamtgewichts, 58 - 60% Mehl, 1 - 20% Zucker; 2,5 - 3,5% Dextrose; 1,5 - 20% pflanzliche Fette und/oder Öle, 1 - 1,5% Salz, 20 - 35% Wasser, 0,5 - 0,7% Weizengluten, 0,5 - 0,7% Hefe und bis zu 0,10% deaktivierte Hefe enthält.

4. Bagel nach Anspruch 1 oder 2, wobei der Bagel, in Gewichtsprozent seines Gesamtgewichts, 58 - 60% Mehl, 1 - 2% Zucker; 2,5 - 3,5% Dextrose, 1,5 - 2,5% pflanzliche Fette und/oder Öle, 1 - 1,5% Salz, 30 - 35% Wasser, 0,5 - 0,7% Weizengluten, 0,5 - 0,7% Hefe und bis zu 0,10% deaktivierte Hefe enthält.

5. Bagel nach einem der Ansprüche 3 und 4, wobei das Mehl ausgewählt ist aus irgendeinem Getreidemehl, bevorzugt in der Gruppe, die aus Hartweizen, Weichweizen, Khorasanweizen (Triticum turgidum ssp. Turanicum), Roggen, Mais, Reis und Gemischen davon besteht, bevorzugter Weichweizenmehl.

6. Bagel nach einem der Ansprüche 3 - 5, wobei die pflanzlichen Öle ausgewählt sind aus der Gruppe, die aus Palmöl, Rapssaatöl, Olivenöl, Sonnenblumenöl, High-Oleic-Sonnenblumenöl, Canolaölen besteht.

7. Verfahren zur Herstellung eines weichen gebackenen Bagelprodukts nach Anspruch 1, wobei das Verfahren folgende Schritte aufweist:
a) Herstellen eines Bagelteigs, der einen Feuchtigkeitsgehalt von 30% hat und eine maltogene alpha-Amylase enthält;
b) Aufteilen des Teigs in Teigbälle eines Gewichts von etwa 80 - 110 g;
c) Unterziehen der Teigbälle konventionellen Formgebungsschritten, um Halbfertigprodukte mit der Form von Ringen zu erhalten;
d) Unterziehen der Halbfertigprodukte konventionellen Schritten des Garens und Backens, um gebackene Bagel zu erhalten;
e) Einlegen der gebackenen Bagel in eine Hülle aus lebensmittelechtem Kunststoff;
f) Sprühen einer wässrig-alkoholischen Lösung ins Innere der Hülle, die die gebackenen Bagel enthält, in einer Menge zwischen 0,5 und 2,0 Gew.-% des Bagelgewichts, wobei die wässrig-alkoholische Lösung eine Lösung von Ethylalkohol in Wasser mit einer Ethylalkohol-Menge zwischen 90 Gew.-% und 95 Gew.-% des Gesamtgewichts der Lösung ist;
g) Verschließen der Hülle.

8. Verfahren nach Anspruch 7, wobei die Teigbälle nach dem Schritt c) und vor dem Schritt d) fünf Minuten lang einem Schritt des Vorgarens bei 20 - 25°C mit einer relativen Feuchtigkeit von 40 - 50% unterzogen werden.

9. Verfahren nach einem der Ansprüche 7 und 8, wobei das Garen des Schritts d) 60 - 150 Minuten lang bei einer Temperatur von 32 - 38°C mit einer relativen Feuchtigkeit von 65 - 85% stattfindet.

10. Verfahren nach einem der Ansprüche 7 bis 9, wobei vor dem Schritt e) des Einlegens gebackener Bagel in eine Hülle, die zur Verpackung in einer unmodifizierten Atmosphäre geeignet ist, an jedem Bagel ein horizontaler Teilschnitt parallel zu seiner unteren Oberfläche, bei oder unterhalb der halben Bagel-Höhe und sich vom Außenrand des Bagels zum inneren Loch des Bagels hin erstreckend, ohne es zu erreichen, dergestalt ausgeführt wird, dass ein oberer Teil und ein unterer Teil erhalten werden, die in dem das inneren Loch umgebenden Bereich noch verbunden sind.

## Revendications

1. Bagel souple cuit au four, emballé dans une enveloppe de matière plastique de qualité alimentaire dans une atmosphère non modifiée, ayant une teneur en humidité comprise entre 28% et 32%, une activité de l'eau comprise entre 0,91 et 0,93, une durée de conservation d'au moins 45 jours à une température comprise entre 12°C et 25°C, **caractérisé en ce qu'**il est obtenu à partir d'une pâte qui est exempte de conservateurs et qui comprend une alpha-amylase maltogène en une quantité de 0,005 % à 1,0 % en poids du poids du bagel et **en ce que** ledit bagel est pulvérisé avec une solution hydroalcoolique avant la fermeture de l'emballage, dans lequel ladite solution hydroalcoolique est une solution aqueuse d'éthanol avec une quantité d'éthanol comprise entre 90 % et 95 % en poids du poids total de la solution, et que la solution est pulvérisée sur la surface du bagel dans une quantité comprise entre 0,5 et 2,0 % en poids du poids du bagel.

2. Bagel selon la revendication 1, dans lequel la quantité de ladite alpha-amylase maltogène est comprise entre 0,05 % et 0,2 %, en poids du poids du bagel.

3. Bagel selon la revendication 1 ou 2, dans lequel ledit bagel comprend, en pourcentage en poids de son poids total, 58-60% de farine ; 1-20% de sucre ; 2,5-3,5% de dextrose ; 1,5-20% de graisses et/ou d'huiles végétales ; 1-1,5% de sel ; 20-35% d'eau ; 0,5-0,7% de gluten de blé ; 0,5-0,7% de levure ; et jusqu'à 0,10% de levure désactivée.

4. Bagel selon la revendication 1 ou 2, dans lequel ledit bagel comprend, en pourcentages en poids de son poids total, 58-60% de farine ; 1-2% de sucre ; 2,5-3,5% de dextrose ; 1,5-2,5% de graisses et/ou d'huiles végétales ; 1-1,5% de sel ; 30-35% d'eau ; 0,5-0,7% de gluten de blé ; 0,5-0,7% de levure ; et jusqu'à 0,10% de levure désactivée.

5. Bagel selon l'une quelconque des revendications 3 et 4, dans lequel ladite farine est choisie parmi toute farine de céréales, de préférence dans le groupe constitué par le blé dur, le blé tendre, le blé khorasan (Triticum turgidum L. subsp.. turanicum), le seigle, le maïs, le riz, et leurs mélanges, plus préférablement la farine de blé tendre.

6. Bagel selon l'une des revendications 3 à 5, dans lequel lesdites huiles végétales sont sélectionnées dans le groupe constitué des huiles de palme, de colza, d'olive, de tournesol, de tournesol à haute teneur en acide oléique, de canola.

7. Procédé de production d'un bagel souple cuit au four selon la revendication 1, dans lequel ledit procédé comprend les étapes suivantes :
a) préparation d'une pâte à bagel ayant une teneur en humidité de 30 % et comprenant une alpha-amylase maltogène ;
b) division de ladite pâte en boules de pâte d'un poids d'environ 80-110 g ;
c) soumission desdites boules de pâte à des étapes de façonnage conventionnelles pour obtenir des produits semi-finis ayant la forme d'anneaux ;
d) soumission desdits produits semi-finis à des étapes conventionnelles de fermentation et de cuisson, pour obtenir des bagels cuits ;
e) insertion desdits bagels cuits dans une enveloppe en matière plastique de qualité alimentaire ;
f) pulvérisation d'une solution hydroalcoolique à l'intérieur de l'enveloppe contenant lesdits bagels cuits, dans laquelle la solution hydroalcoolique est une solution aqueuse d'éthanol avec une quantité d'éthanol comprise entre 90 % et 95 %, en poids du poids total de la solution, dans une quantité comprise entre 0,5 et 2,0 % en poids du poids du bagel ;
g) fermeture de l'enveloppe.

8. Procédé selon la revendication 7, dans lequel, après ladite étape c) et avant ladite étape d), lesdites boules de pâte sont soumises à une étape de pré-fermentation à 20-25° C avec une humidité relative de 40-50% pendant cinq minutes.

9. Procédé selon l'une quelconque des revendications 7 et 8, dans lequel la fermentation de ladite étape d) se produit à une température de 32-38°C, avec une humidité relative de 65-85% pendant 60-150 minutes.

10. Procédé selon l'une quelconque des revendications 7 à 9, dans lequel, avant ladite étape e) d'insertion des bagels cuits dans une enveloppe appropriée pour l'emballage dans une atmosphère non modifiée, une coupe horizontale partielle est effectuée sur chaque bagel, parallèlement à sa surface inférieure, à ou sous la moitié de la hauteur du bagel et s'étendant du bord périphérique du bagel vers le trou intérieur du bagel sans l'atteindre, de manière à obtenir une partie supérieure et une partie inférieure qui sont encore jointes dans la zone entourant le trou intérieur.
